# EUROPÄISCHE PATENTSCHRIFT

(11) **EP 3 702 651 B1**
(45) Veröffentlichungstag und Bekanntmachung des Hinweises auf die Patenterteilung: **24.02.2021**
(21) Anmeldenummer: 19159951.3
(22) Anmeldetag: 28.02.2019
(51) Int. Cl.: F16K 31/60, F16K 11/078

(54) **VENTILOBERTEIL FÜR SANITÄRARMATUREN**
VALVE TOP SECTION FOR SANITARY FITTINGS
PARTIE SUPÉRIEURE DE SOUPAPE POUR ROBINETTERIES SANITAIRES

(43) Veröffentlichungstag der Anmeldung: 02.09.2020
(73) Patentinhaber: Flühs Drehtechnik GmbH, 58515 Lüdenscheid (DE)
(72) Erfinder: Wendt, Jörg, 58509 Lüdenscheid (DE)
(74) Vertreter: Patentanwälte Dörner & Kötter PartG mbB

(56) Entgegenhaltungen:
- EP-A1- 0 426 587
- WO-A1-2005/085691
- DE-A1- 3 525 052
- DE-T1- 19 580 519
- DE-T2- 69 008 114
- DE-U1-202011 103 480
- GB-A- 1 446 862

## Beschreibung

Die Erfindung betrifft ein Ventiloberteil zum Einbringen in eine Sanitärarmatur, gemäß dem Oberbegriff des Anspruchs 1. Ein solches Ventiloberteil ist beispielsweise aus der EP 0 426 587 A1 bekannt. Mit Hilfe von Ventiloberteilen wird der Austritt von Medien aus Armaturen, insbesondere von Wasser aus Sanitärarmaturen gesteuert. Für diesen Zweck wird das Ventiloberteil (auch als Ventilkartusche bezeichnet) mittels seines Kopfstücks in das Gehäuse einer Armatur positioniert; auf seine Spindel wird ein Drehgriff oder Hebel gesteckt. Bei bekannten Ventiloberteilen mit drehbarer Spindel (vgl. DE 32 07 895 C2) sind jeweils zwei Scheiben zur Steuerung des Durchflusses vorgesehen. Die Scheiben sind aus keramischem Material hergestellt. Einer der beiden Scheiben - Stellblock - ist mithilfe eines mit der Spindel in Verbindung stehenden Mitnehmers drehbar in dem Ventiloberteil angeordnet. Die andere Scheibe - Durchlassscheibe - ist eine feste Ventilsitzscheibe, auch als Festscheibe bezeichnet. Bei Drehung des Stellblocks gleiten die Scheiben aneinander. Auf der dem Ventilsitz der Armatur zugewandten Seite ist eine Dichtung angeordnet, die an der Durchlassscheibe anliegt. Die Dichtung überragt die Stirnfläche des Ventiloberteils. Sie dient zur Abdichtung sowohl der Durchlassscheibe als auch zum Ventilsitz der Armatur.

Auch bei Einhebel-Mischventilen finden zur Steuerung des Durchflusses Keramik-Scheiben Anwendung (vgl. EP 1 462 692 B1). Bei diesen Ventilen ist eine dreh- und schwenkbar gelagerte Spindel vorgesehen, mit deren Hilfe die Steuerung des Durchflusses erfolgt. Die Spindel weist eine Kugel auf, mit deren Hilfe die Spindel in dem Kopfstück schwenkbar ist. Unmittelbar im Anschluss weist die Spindel einen weiteren kugelförmigen Teil auf, mit dem die Spindel in einen mit dem Stellblock in Verbindung stehenden Mitnehmer greift. Die Steuerung des Wasseraustritts erfolgt hier durch Verschwenken der Spindel, die über den Eingriff in den Stellblock translatorisch relativ zur ortsfesten Durchlassscheibe bewegt wird.

Der vorliegenden Erfindung liegt die Aufgabe zugrunde, ein Ventiloberteil mit einem alternativen Bedienkonzept bereitzustellen, das einfach aufgebaut ist und bei dem nur durch Verschwenken der Spindel eine Umschaltfunktion erzielbar ist. Gemäß der Erfindung wird diese Aufgabe durch ein Ventiloberteil mit den Merkmalen des kennzeichnenden Teils des Patentanspruchs 1 gelöst.

Mit der Erfindung ist ein Ventiloberteil bereitgestellt, das einfach aufgebaut ist und bei dem nur durch Verschwenken der Spindel eine Umschaltfunktion erzielbar ist. Dadurch, dass die Durchlassscheibe wenigstens zwei Durchtrittsöffnungen aufweist, wobei das Steuerelement als Stellblock ausgebildet ist, der derart dimensioniert ist, dass über diesen zumindest eine Durchtrittsöffnung verschließbar ist, ist ein einfacher und zugleich robuster Aufbau erzielt, wobei durch Verschwenken der Spindel eine Verschiebung des Steuerblocks erzielt ist, die durch Überdeckung zumindest einer Durchtrittsöffnung den Durchfluss eines anliegenden Wasserzuflusses durch wenigstens eine Durchtrittsöffnung ermöglicht. Dabei weist das Kopfstück bevorzugt wenigstens ein seitlich angeordnetes Durchtrittsfenster auf, wobei die Durchlassscheibe unterhalb des Durchtrittsfensters auf dessen der Spindel gegenüberliegenden Seite angeordnet ist.

Gemäß der Erfindung sind die Durchtrittsöffnungen jeweils durch die zumindest bereichsweise Überdeckung eines in die Durchlassscheibe auf ihrer dem Stellblock zugewandten Oberseite eingebrachten Sammelkanals mit einem auf ihrer gegenüberliegenden Unterseite in diese eingebrachten Auslasskanal gebildet. Hierdurch ist eine Anpassung der zuflussseitigen, durch den Steuerblock überdeckbaren Seite und der ablaufseitigen mit den in dem Ventilsitz einer Sanitärarmatur angeordneten Ablaufleitungen anzuschließenden Seite der Durchtrittsöffnungen ermöglicht. Eine vollständige Überdeckung von Sammelkanal und Auslasskanal wäre beispielweise in Form einer Durchbohrung durch die Durchlassscheibe erzielbar. In diesem Fall wären Sammelkanal und Auslasskanal identisch kreisrund ausgebildet.

Gemäß der Erfindung ist wenigstens ein Auslasskanal kreisrund ausgebildet und wenigstens ein Sammelkanal erstreckt sich an zwei gegenüberliegenden Seiten über den zugeordneten Auslasskanal hinaus. Dabei ist der Sammelkanal bevorzugt schmaler ausgebildet, als der zugeordnete Auslasskanal. Hierdurch ist nur eine geringe Verschiebung des Stellblocks erforderlich, um die Durchgangsöffnung zu verschließen.

In weiterer Ausgestaltung der Erfindung ist wenigstens ein Sammelkanal bogenförmig ausgebildet. Hierdurch ist durch Verschiebung des Stellblocks eine zunehmende Überdeckung der Durchgangsöffnung erzielt, wodurch der durch den Druck des zulaufenden Wassers dem Stellblock entgegenwirkende Widerstand reduziert und die Bedienung erleichtert ist.

In weiterer Ausgestaltung der Erfindung sind zwei Durchtrittsöffnungen angeordnet, die durch die Überdeckung zweier zueinander gegenläufig bogenförmig ausgebildeter Sammelkanäle mit jeweils einem kreisförmig ausgebildeten Auslasskanal gebildet sind. Hierdurch ist eine Durchflusssteuerung über nur geringe Verschiebewege des Stellblocks ermöglicht.

In Weiterbildung der Erfindung ist in dem Kopfstück die Durchtrittsöffnungen der Durchlassscheibe umgebend wenigstens eine Dichtung angeordnet, die vorzugsweise als Lippendichtung ausgebildet ist. Hierdurch ist eine gute Abdichtung der Durchgangsöffnungen der Durchflussscheibe gegenüber dem Ventilsitz einer Sanitärarmatur erzielt.

In weiterer Ausgestaltung der Erfindung greift die Spindel an ihrem aus dem Kopfstück herausragenden Ende in einen Schwenkraum eines Schiebers ein, in dem ein Mitnehmer angeordnet ist, über den die Spindel mit dem Schieber verbunden ist. Hierdurch ist ein Verschwenken der Spindel durch eine lediglich translatorische Bewegung des Griffteils ermöglicht, wobei die Bewegung des Schiebers über den Mitnehmer auf die Spindel übertragen wird. Die hierdurch bewirkte Kreisbogenbewegung des Endes der Spindel um ihre Schwenkachse erfolgt innerhalb des Schwenkraums des Schiebers. Der Schwenkraum ist hierzu derart ausgebildet, dass er das Ende der Spindel in jeder Schwenkposition aufnimmt. Das als Schieber ausgebildete Griffteil wird in diese Kreisbogenbewegung des ersten Endes der Spindel nicht involviert.

In Weiterbildung der Erfindung ist der Mitnehmer durch eine Mitnehmerachse gebildet, die durch ein sich in Axialrichtung der Spindel erstreckendes Langloch geführt ist. Hierdurch ist ein Gleiten des Mitnehmers bei einer Schwenkbewegung der Spindel innerhalb des Langlochs ermöglicht; eine Kraftübertragung zwischen Schieber und Spindel erfolgt ausschließlich in translatorischer Bewegungsrichtung des Schiebers. Unter dem Begriff "Langloch" ist vorliegend auch ein in die Spindel eingebrachter Schlitz zu subsummieren, der quasi ein oben offenes Langloch darstellt.

In Ausgestaltung der Erfindung ist die Spindel über ein Federelement mit dem Mitnehmer verbunden. Hierdurch ist eine Vorspannung des Schiebers über den in diesem angeordneten Mitnehmer gegen die Spindel erzielt, wodurch der Schieber auf der Verschiebefläche der Armatur gehalten ist. Bevorzugt ist das Federelement über eine Schraubenfeder gebildet.

In weiterer Ausgestaltung der Erfindung ist die Spindel über einen Achsstift mit dem Kopfstück schwenkbar verbunden, wobei der Achsstift mit dem Federelement verbunden ist. Bevorzugt ist das Federelement von einer axial in die Spindel eingebrachten Sackbohrung aufgenommen, die in Querrichtung von dem Achsstift durchdrungen ist, der mit dem Federelement verbunden ist. Hierdurch ist eine Integration des Federelements in die Spindel erzielt, wodurch eine äußere Beeinträchtigung des Federelements durch Verschmutzung vermieden und eine kompakte Bauweise erzielt ist.

In Weiterbildung der Erfindung ist die Mitnehmerachse von einer Kulisse des Schiebers aufgenommen, die bevorzugt in die den Schwenkraum begrenzende Wand eingebracht ist. Dabei ist die Mitnehmerachse bevorzugt in die Kulisse hineinbewegbar und in einer definierten Position verrastbar. Hierdurch ist eine einfache Montage des Schiebers auf der Spindel ermöglicht. Hierzu wird die Mitnehmerachse in die Kulisse eingeführt und durch Rotation des Schiebers in einen Hinterschnitt der Kulisse verbracht, in dem die Mitnehmerachse durch die von dem Federelement auf diese aufgebrachte Vorspannung ähnlich einem Bajonettverschluss hineingleitet. Der Schieber ist so fest mit der Spindel verbunden.

In Weiterbildung der Erfindung weist die Spindel einen kugelförmigen Abschnitt auf, an dem der Zapfen angeordnet ist. Dabei liegt die Spindel bevorzugt mit ihrem kugelförmigen Abschnitt auf einer Scheibenführung auf, in der die Stellblock geführt ist. Vorteilhaft ist die Spindel mit Ihrem kugelförmigen Abschnitt zwischen zwei beabstandet zueinander angeordneten Dichtungsringen schwimmend gelagert, welche bevorzugt als O-Ringe ausgebildet sind. Hierdurch ist eine gedämpfte Lagerung der Spindel erzielt, wodurch eine gute Haptik des Ventiloberteils erzielt ist.

In Ausgestaltung der Erfindung ist an dem Schieber ein Anzeigeelement angeordnet, über das die Position des Stellblocks anzeigbar ist. Dabei ist das Anzeigeelement bevorzugt in dem Schieber verschiebbar und von außen zumindest bereichsweise sichtbar angeordnet und derart mit der Spindel zumindest temporär verbunden, dass es durch Verschwenken der Spindel relativ zum Schieber verschiebbar ist. Hierdurch ist eine optische Erfassung der Position des Stellblocks erzielt.

In weiterer Ausgestaltung der Erfindung sind an dem Schieber Markierungen angeordnet, die jeweils einer Position des Stellblocks zugeordnet sind. Hierdurch ist die optische Erfassung der Umschaltstellung des Ventiloberteils ermöglicht (bspw. "Durchfluss zum Badewannenauslauf ermöglicht, Durchfluss zum Duschauslauf gesperrt").

In weiterer Ausgestaltung der Erfindung weist das Anzeigeelement zumindest zwei Bereiche unterschiedlicher Farbe auf und ist relativ zu einem in dem Schieber vorhandenen Fenster verschiebbar, derart, dass durch das Fenster in Abhängigkeit von der Position des Anzeigeelements unterschiedliche Farben sichtbar sind. Hierdurch ist die optische Erfassung der Umschaltstellung durch den Bediener weiter verbessert. Alternativ oder zusätzlich können die Bereiche auch mit Symbolen versehen sein, die in einer jeweiligen Stellung des Stellblocks im Bereich des Fensters positioniert und durch dieses sichtbar sind.

Gegenstand der Erfindung ist weiterhin eine Sanitärarmatur mit einem Ventilsitz, in dem wenigstens ein Zulaufkanal und wenigstens ein Ablaufkanal münden und in dem ein Ventiloberteil der vorgenannten Art derart eingebracht ist, dass die Durchlassöffnungen der Durchlassscheibe mit den Ablaufkanälen verbunden sind. Dabei ist der Zulaufkanal bevorzugt derart angeordnet, dass er im Wesentlichen in einer Ebene mit dem wenigstens einen Durchtrittsfenster des Kopfstücks des Ventiloberteils liegt.

In Weiterbildung der Erfindung ist eine Gleitplatte angeordnet, durch welche die Spindel geführt ist und auf welcher der Schieber des Ventiloberteils verschiebbar aufliegt. Die Gleitplatte kann aus jedwedem, vorzugsweise glatten Material, beispielsweise in Form einer Glasplatte ausgebildet sein.

In Ausgestaltung der Erfindung ist oberhalb des Ventilsitzes ein Innengewinde angeordnet, in das eine Schraubhülse zur Fixierung des Ventiloberteils in dem Ventilsitz einschraubbar ist. Alternativ kann das Ventiloberteil auch in den Ventilsitz einsetzeckbar sein, um dessen Ausrichtung zu vereinfachen. Das Ventiloberteil ist in diesem Fall durch eine Sicherungsmutter oder durch ein sonstiges Sicherungselement axial zu fixieren.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung eines Ventiloberteils im Längsschnitt;

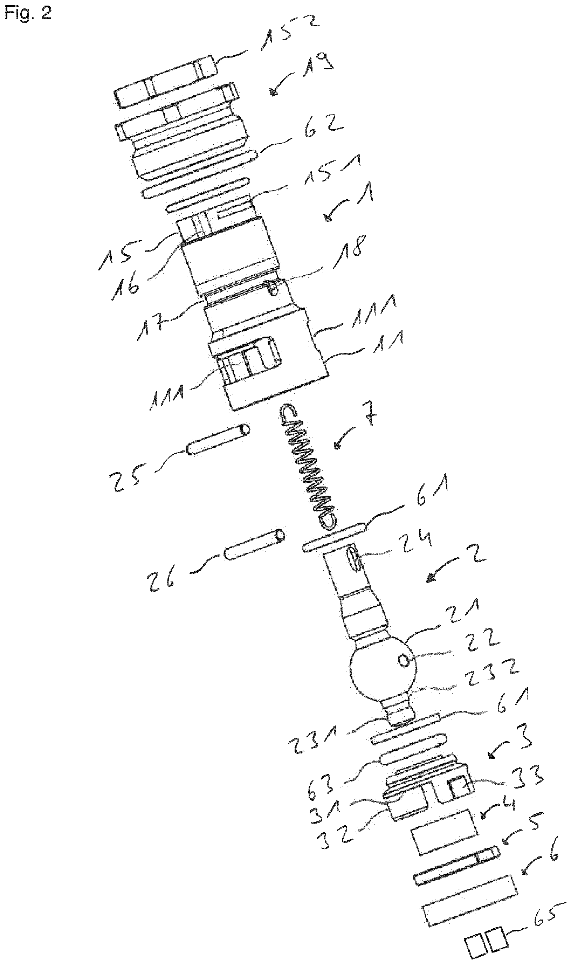

- Figur 2: die schematische Darstellung des Ventiloberteils aus Figur 1 in Explosionsdarstellung (ohne Schieber),
- Figur 3: die schematische Darstellung einer Sanitärarmatur mit montiertem Ventiloberteil nach Figur 1,
- Figur 4: die schematische Darstellung des Stellblocks eines Ventiloberteils einer zweiten Ausführungsform a) im Querschnitt; b) in der Draufsicht;
- Figur 5: die schematische Darstellung der Durchlassscheibe eines Ventiloberteils einer zweiten Ausführungsform a) in der Draufsicht; b) im Querschnitt; c) in der Ansicht von unten;
- Figur 6: die schematische Darstellung der Durchlassscheibe aus Figur 4 mit auf dieser positioniertem Stellblock gemäß Figur 3.

Das als Ausführungsbeispiel gewählte Ventiloberteil weist ein Kopfstück 1 auf, das von einer in ihm radial geführten Spindel 2 mittig durchsetzt ist. Die Spindel 2 ist über eine drehfeste Scheibenführung 3 geführt und mit einem Stellblock 4 im Eingriff, welcher wiederum in der Scheibenführung 3 geführt ist. Der Stellblock 4 steht mit einer Durchlassscheibe 5 in Berührung, die in dem Kopfstück gehalten ist und auf ihrer dem Stellblock 4 abgewandten Seite mit einer Dichtung 6 in Berührung steht. Die Spindel 2 nimmt eine Schraubenfeder 7 auf, über welche die Spindel 2 mit einem Schieber 8 verbunden ist.

Das Kopfstück 1 besteht aus einem symmetrischen Hohlkörper, dessen beiden Stirnflächen offen sind. Auf seiner der Armatur 9 zugewandten Seite weist das Kopfstück 1 einen hülsenartigen Teil 11 auf, in dem diametral gegenüberliegend zwei Durchtrittsfenster 111 eingebracht sind, die von Längsstegen begrenzt sind. Innen ist in dem hülsenartigen Teil 10 endseitig eine Nut 112 zur Aufnahme der Dichtung 6 eingebracht.

Auf seiner der Armatur 9 abgewandten Seite ist im Anschluss an die Fenster 111 innen eine umlaufende Rastnut 12 zur Rastverbindung der Scheibenführung 3 angeordnet. Im weiteren Verlauf der Innenkontur des Kopfstücks 1 ist der Innendurchmesser abgesetzt und mit geringerem Durchmesser fortgeführt, wodurch ein Absatz 13 gebildet ist. Der Absatz 13 dient der Anlage eines Halterings 61, der zusammen mit der Scheibenführung 3 eine Aufnahme für einen zweiten O-Ring 63 ausbildet. An den Absatz 13 schließt sich eine kugelabschnittförmige Durchmesserverjüngung an, die von einer Ringnut 14 zur Aufnahme eines ersten O-Rings 62 begrenzt ist und in einer senkrechten Bohrung mündet, an die sich ein Führungsabschnitt 15 anschließt, der eine längliche Öffnung 16 aufweist. In dem Führungsabschnitt 15 ist außen ein Außengewinde 151 zur Aufnahme einer Ankermutter 152 eingebracht. Unterhalb des Führungsabschnitts 15 ist in das Kopfstück 1 außen eine umlaufende Nut 17 zur Aufnahme eines Dichtungsrings 64 zur Abdichtung gegenüber der Armatur 9 eingebracht. Beabstandet zu der umlaufende Nut 17 sind in das Kopfstück 1 weiterhin diametral gegenüberliegend zwei vertikale Langlochbohrungen 18 zur Aufnahme des durch die Bohrung 22 des kugelförmigen Abschnitts 21 der Spindel 2 geführten Achsstifts 26 eingebracht.

Die Spindel 2 ist im Wesentlichen zylinderförmig ausgebildet und weist an einem Ende eine kugelförmige Anformung 21 auf, in die orthogonal zur Rotationsachse der Spindel 2 eine Bohrung 22 zur Aufnahme eines Achsstifts 26 eingebracht ist. An seiner der Scheibenführung 3 zugewandten Seite ist in den kugelförmigen Abschnitt 21 koaxial zur Rotationsachse der Spindel 2 ein Zapfen 23 eingeschraubt, der endseitig einen tonnenförmigen Mitnehmerabschnitt 231 aufweist, an den sich ein zylindrischer Abschnitt 232 anschließt, der an dem kugelförmigen Abschnitt 21 anliegt. An ihrem dem Zapfen 23 gegenüberliegenden Ende ist in die Spindel 2 orthogonal zu Ihrer Rotationsachse eine Langlochbohrung 24 zur Aufnahme der Mitnehmerachse 25 eingebracht. Zentrisch ist die Spindel 2 mit einer entlang ihrer Rotationsachse verlaufenden Sacklochbohrung 27 versehen, die oberhalb des Zapfens 23 in dem kugelförmigen Abschnitt 21 mündet und von der Bohrung 22 sowie der Langlochbohrung 24 durchkreuzt ist.

Die Sacklochbohrung 27 dient der Aufnahme der Schraubenfeder 7, die endseitig von dem Achsstift 26 auf der einen Seite sowie der Mitnahmeachse 25 auf der anderen Seite aufgenommen ist.

Die Spindel 2 ist in dem Kopfstück 1 mit ihrer kugelförmigen Anformung 21 zwischen dem ersten O-Ring 62 und dem zweiten O-Ring 63 schwimmend gelagert und durchdringt die längliche Öffnung 16 des Führungsabschnitts 15.

Die Scheibenführung 3 ist im Wesentlichen zylindrisch ausgebildet. An ihrer dem kugelförmigen Abschnitt 21 der Spindel 2 abgewandten Seite ist eine ebene Führungsfläche 31 angeordnet, die von zwei diametral gegenüberliegend angeordneten Führungsstegen 32 begrenzt ist. Die Führungsstege 32 sind an ihrer Außenseite mit zwei Führungsnasen 33 versehen, die in - nicht dargestellte - Führungsnuten auf der Innenseite des hülsenartigen Teils 11 des Kopfstücks 1 eingreifen, welche von der Nut 112 bis zum oberen Rand der Durchtrittsfenster 111 verlaufen. Durch das Eingreifen der Führungsnasen 33 in die Führungsnuten des Kopfstücks ist eine Verdrehsicherung der Scheibenführung 3 innerhalb des Kopfstücks 1 bewirkt.

In die Scheibenführung 3 ist mittig eine Spindelführung 34 in Form eines Langlochs eingebracht, dessen Längsachse parallel zu den Führungsstegen 32 verläuft und durch die der mit der Spindel 2 verbundene Zapfen 23 durchtritt. Die Länge des Langlochs der Spindelführung 34 nimmt entlang der Rotationsachse des zylindrischen Grundkörpers in Richtung der Führungsflächen 31 zu; die Spindelführung 34 ist folglich im Wesentlichen kegelförmig ausgebildet. An ihrem der Führungsflächen 31 abgewandten Ende ist die Spindelführung 34 umlaufend mit einer Kugelaufnahme 35 versehen, die in Art einer Fase ausgebildet ist.

Zwischen den Führungsstegen 32 der Scheibenführung 3 ist an der Führungsfläche 31 anliegend der Stellblock 4 angeordnet. Dieser weist eine im Wesentlichen elliptische Außenkontur auf, die an ihren Längsenden orthogonal zur Längsmittelachse gekürzt ist, wodurch zwei zueinander parallele Seitenflächen gebildet sind, die an den Führungsstegen 32 der Scheibenführung 3 anliegen. Mittig ist in den Stellblock 4 eine Sacklochbohrung 41 eingebracht, deren Durchmesser etwas größer ist, als der Durchmesser des kugelabschnittförmigen Endes des Mitnehmerabschnitts 231 des Zapfens 23 der Spindel 2. Im montierten Zustand greift der Mitnehmerabschnitt 231 in die Sacklochbohrung 41 ein.

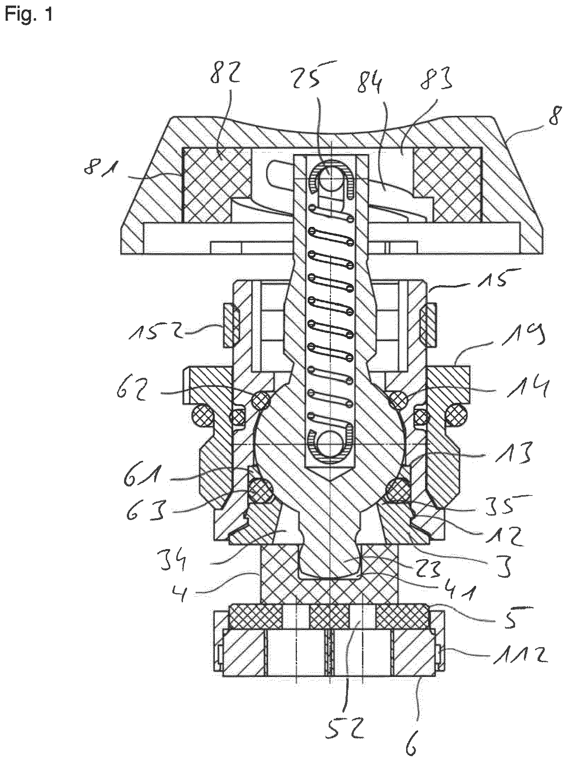

Die Durchlassscheibe 5 ist im Wesentlichen als kreisrunde Scheibe ausgebildet. Sie weist auf ihrem Umfang zwei sich diametral gegenüberliegende Führungsnasen 51 auf, die in korrespondierende Führungsnuten des hülsenförmigen Teils 11 des Kopfstücks 1 eingreifen. Die Durchlassscheibe 5 ist damit drehfest in dem Kopfstück 1 gehalten. In der Durchlassscheibe 5 sind diametral gegenüberliegend zwei Durchtrittsöffnungen 51 eingebracht, die eine angenähert elliptische Innenkontur aufweisen. Wird die Spindel 2 mit dem an dieser befestigten Zapfen 23 innerhalb der Spindelführung 34 geschwenkt, so wird der Stellblock 4 radial auf der Durchlassscheibe 5 bewegt, wodurch eine der Durchtrittsöffnungen 51 der Durchlassscheibe 5 freigegeben und die andere verschlossen wird. In der in Figur 1 dargestellten Mittelposition des Stellblocks 4 sind beide Durchtrittsöffnungen verschlossen.

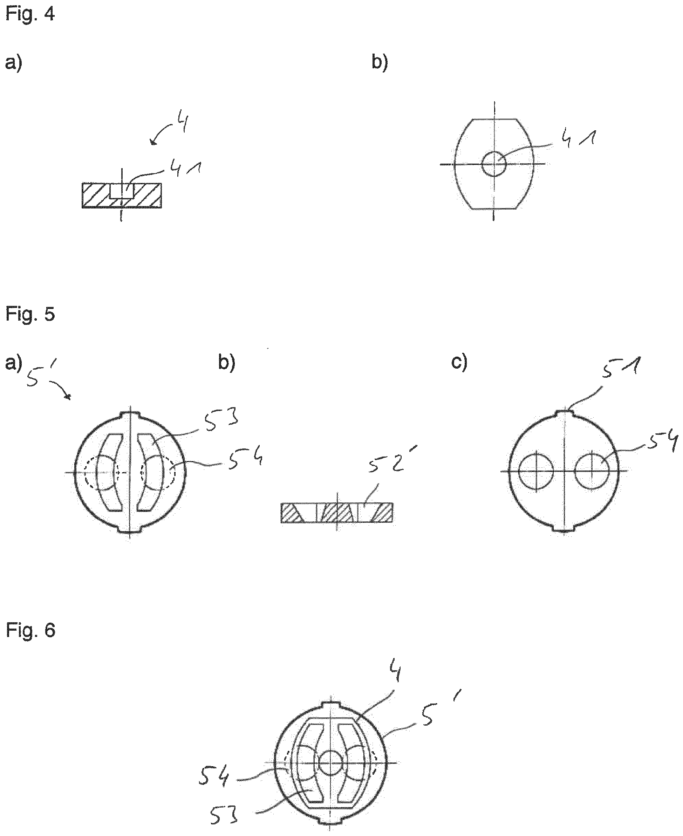

In den Figuren 5 ist eine Paarung aus Stellblock 4 und Durchlassscheibe 5' einer weiteren Ausführungsform eines Ventiloberteils dargestellt. Hierbei sind in die dem Stellblock 4 zugewandte Oberseite der Durchlassscheibe zwei gegenläufig zueinander angeordnete, bogenförmige Sammelkanäle 53 und auf der gegenüberliegenden Unterseite der Durchlassscheibe zwei diametral gegenüberliegend angeordnete kreisrunde Auslasskanäle 54 eingebracht. Im Bereich der Überdeckung eines jeden Sammelkanals 53 mit dem gegenüberliegend positionierten Auslasskanal 54 ist eine Durchtrittsöffnung 52' gebildet.

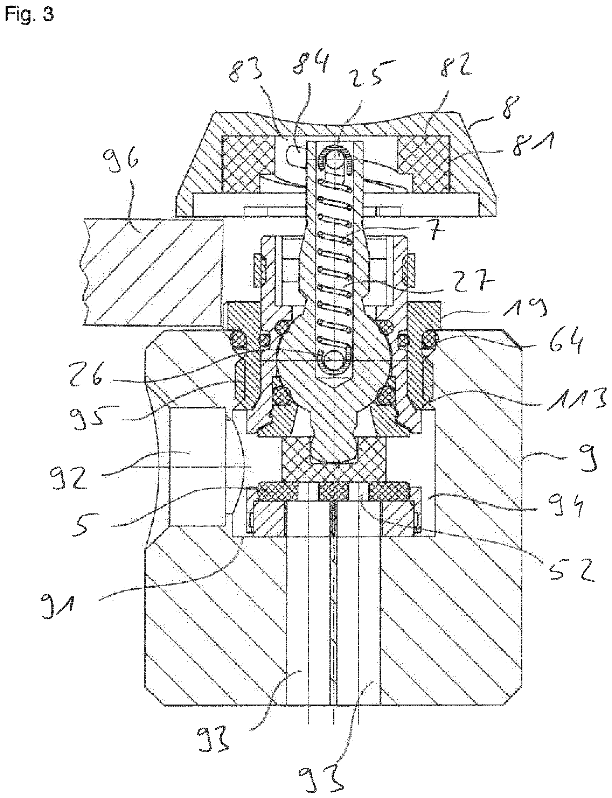

Das Kopfstück 1 ist in den Ventilsitz 91 der Armatur 9 eingesetzt, wobei das Kopfstück 1 über die Dichtung 6 gegenüber den Ablaufkanälen 93 der Armatur 9 abgedichtet ist. Die Dichtung 6 ist in dem Kopfstück 1 die Durchtrittsöffnungen 52 der Durchlassscheibe 5 sowie die Ablaufkanäle 93 umgebend angeordnet und die Durchtrittsöffnungen 52 einrahmend mit Stützhülsen 65 versehen. Das Kopfstück 1 ist in dem Ventilsitz 91 derart positioniert, dass die Durchtrittsfenster 111 des hülsenartigen Teils 11 des Kopfstücks 1 in einer Kammer 94 der Armatur 9 positioniert sind, in die ein Zulaufkanal 92 mündet. Oberhalb der Kammer 94 weist die Armatur ein Innengewinde 95 auf, in die eine Schraubhülse 19 eingeschraubt ist, über die das Kopfstück 1 in der Armatur 9 fixiert ist. Die Schraubhülse 19 liegt dabei auf einem oberhalb der Durchtrittsfenster 111 umlaufend an dem hülsenartigen Teil 11 des Kopfstücks 1 angeformten Absatz 113 auf. Oberhalb des Innengewindes 95 ist die Schraubhülse 19 über einen Dichtungsring 64 gegenüber der Armatur 9 abgedichtet. Auf der Armatur 9 ist eine - in Figur 3 lediglich angedeutete - Glasscheibe 96 befestigt, auf welcher der Schieber 8 des Ventiloberteils aufliegt. Die Glasscheibe 96 ist über eine Ankermutter 152, die auf das Außengewinde 151 des Führungsabschnitts 15 des Kopfstücks 1 aufgeschraubt ist, auf der Armatur 9 fixiert.

Der Schieber 8 weist an seiner der Armatur 9 zugewandten Unterseite eine im Wesentlichen zylindrische Ausnehmung 81 auf, in die ein Kulisseneinsatz 82 eingesetzt ist. Der Kulisseneinsatz 82 weist einen im Wesentlichen hohlzylindrischen Schwenkraum 83 auf, in dessen Mantelfläche eine Kulissenführung 84 eingebracht ist, in welche die Mitnehmerachse 25 hineinbewegbar sowie in einen Hinterschnitt der Kulissenführung 84 einrastbar ist. Der Schwenkraum 83 des Kulisseneinsatzes 82 ist derart dimensioniert, dass das von diesem aufgenommenen Ende der Spindel 2 über deren Schwenkbewegung frei bewegbar ist.

Der Schieber 8 ist über die von den Kulisseneinsatz 82 aufgenommene Mitnehmerachse 25, die über die Schraubenfeder 7 mit dem Achsstift 86 der Spindel 2 verbunden ist, gegen die auf der Armatur 9 angeordnete Glasscheibe 96 vorgespannt. Zur Betätigung des Ventiloberteils wird der Schieber 8 entlang der Glasscheibe 96 verschoben. Diese Schiebebewegung wird über die Mitnehmerachse 25 auf die Spindel 2 übertragen, welche hierdurch um den Achsstift 26 verschwenkt wird. Dabei durchläuft das in den Schwenkraum 83 des Schiebers 8 befindliche Ende der Spindel 2 einen Kreisbogen, ohne jedoch mit einer Wand des Schiebers 8 in Berührung zu kommen. Die Mitnehmerachse 25 wandert hierbei innerhalb der Langlochbohrung 24 der Spindel 2. Durch die Schwenkbewegung der Spindel 2 wird der Stellblock 4, mit dem sie über den Zapfen 23 im Eingriff ist, translatorisch in der Schieberbewegung entgegengesetzten Bewegung auf der Durchlassscheibe 5 bewegt.

Zur Anzeige der jeweiligen Position des Stellblocks 4, das heißt, der durch diesen freigegebenen bzw. verschlossenen Durchtrittsöffnung 52, kann der Schieber mit einem verschiebbar angeordneten Anzeigeelement, bspw. in Form eines Stiftes oder eines Schlittens versehen sein, der durch das in den Schieber hineinragende Ende der Spindel 2 verschiebbar ist. Dabei weist das Anzeigeelement zwei verschiedenfarbige Abschnitte auf, die über das Ende der Spindel 2 bei deren Verschwenken in den Bereich eines in dem Schieber 8 angeordneten Fensters bewegt wird. Durch das Erscheinen einer der beiden Farben in dem Fenster kann die jeweilige Ventilstellung unmittelbar optisch erfasst werden.

## Patentansprüche

1. Ventiloberteil zum Einbringen in eine Sanitärarmatur, mit einem Kopfstück (1), in dem eine Spindel (2) schwenkbar gelagert ist, die mit ihrem ersten Ende aus dem Kopfstück (1) herausragt und mit ihrem zweiten Ende über einen Zapfen (23) mit einem Steuerelement im Eingriff steht, das mit einer ortsfesten Durchlassscheibe (5) in Berührung steht, wobei die Durchlassscheibe (5) wenigstens zwei Durchtrittsöffnungen (52, 52') aufweist, wobei das Steuerelement als Stellblock (4) ausgebildet ist, der derart dimensioniert ist, dass über diesen zumindest eine Durchtrittsöffnung (52, 52') verschließbar ist, **dadurch gekennzeichnet, dass** die Durchtrittsöffnungen (52, 52') jeweils durch die zumindest bereichsweise Überdeckung eines in die Durchlassscheibe (5, 5') auf ihrer dem Stellblock (4) zugewandten Oberseite eingebrachten Sammelkanals (53) mit einem auf ihrer gegenüberliegenden Unterseite in diese eingebrachten Auslasskanal (54) gebildet sind, wobei wenigstens ein Auslasskanal (54) kreisrund ausgebildet ist, wobei wenigstens ein Sammelkanal (53) sich an zwei gegenüberliegenden Seiten über den zugeordneten Auslasskanal (54) hinaus erstreckt, wobei wenigstens ein Sammelkanal (53) bogenförmig ausgebildet ist.

2. Ventiloberteil nach Anspruch 1, **dadurch gekennzeichnet, dass** das Kopfstück (1) wenigstens ein seitlich angeordnetes Durchtrittsfenster (111) aufweist, wobei die Durchlassscheibe (5, 5') unterhalb des Durchtrittsfensters (111) auf dessen der Spindel (2) gegenüberliegenden Seite angeordnet ist.

3. Ventiloberteil nach Anspruch 2, **dadurch gekennzeichnet, dass** alle Auslasskanäle (54) kreisrund ausgebildet sind, wobei bevorzugt wenigstens ein Sammelkanal (53) schmaler als der zugeordnete Auslasskanal (54) ausgebildet ist.

4. Ventiloberteil nach Anspruch 3, **dadurch gekennzeichnet, dass** zwei Durchtrittsöffnungen (52, 52') angeordnet sind, die durch die Überdeckung zweier zueinander gegenläufig bogenförmig ausgebildeter Sammelkanäle (53) mit jeweils einem kreisförmig ausgebildeten Auslasskanal (54) gebildet sind.

5. Ventiloberteil nach einem der vorgenannten Ansprüche, **dadurch gekennzeichnet, dass** in dem Kopfstück (1) die Durchtrittsöffnungen (52, 52') der Durchlassscheibe (5, 5') umgebend wenigstens eine Dichtung (6), bevorzugt wenigstens eine Lippendichtung angeordnet ist.

6. Ventiloberteil nach einem der vorgenannten Ansprüche, **dadurch gekennzeichnet, dass** die Spindel (2) an ihrem aus dem Kopfstück (1) herausragenden Ende in einen Schwenkraum (83) eines Schiebers (8) eingreift, in dem ein Mitnehmer angeordnet ist, über den die Spindel (2) mit dem Schieber (8) verbunden ist.

7. Ventiloberteil nach Anspruch 6, **dadurch gekennzeichnet, dass** der Mitnehmer durch eine Mitnehmerachse (25) gebildet ist, die durch ein in Axialrichtung der Spindel (2) sich erstreckendes Langloch (24) geführt ist, wobei die Spindel (2) bevorzugt über ein Federelement, insbesondere über eine Schraubenfeder (7) mit dem Mitnehmer verbunden ist und wobei die Spindel (2) besonders bevorzugt über einen Achsstift (26) mit dem Kopfstück (1) schwenkbar verbunden ist, wobei der Achsstift (26) mit dem Federelement verbunden ist.

8. Ventiloberteil nach Anspruch 7, **dadurch gekennzeichnet, dass** das Federelement von einer axial in die Spindel (2) eingebrachten Sackbohrung (27) aufgenommen ist, die in Querrichtung von dem Achsstift (26) durchdrungen ist, der mit dem Federelement verbunden ist.

9. Ventiloberteil nach einem der Ansprüche 6 bis 8, **dadurch gekennzeichnet, dass** an dem Schieber (8) ein Anzeigeelement angeordnet ist, über das die Position des Stellblocks (4) anzeigbar ist, wobei das Anzeigeelement bevorzugt in dem Schieber (8) verschiebbar und von außen zumindest bereichsweise sichtbar angeordnet ist und derart mit der Spindel (2) zumindest temporär verbunden ist, dass es durch Verschwenken der Spindel (2) relativ zum Schieber (8) verschiebbar ist und wobei besonders bevorzugt an dem Schieber (8) Markierungen angeordnet sind, die jeweils einer Position des Stellblocks (4) zugeordnet sind.

10. Ventiloberteil nach Anspruch 9, **dadurch gekennzeichnet, dass** das Anzeigeelement zumindest zwei Bereiche unterschiedlicher Farbe aufweist und relativ zu einem in dem Schieber (8) vorhandenen Fenster verschiebbar ist, derart, dass durch das Fenster in Abhängigkeit von der Position des Anzeigeelements unterschiedliche Farben sichtbar sind.

11. Ventiloberteil nach einem der vorgenannten Ansprüche, **dadurch gekennzeichnet, dass** die Spindel (2) einen kugelförmigen Abschnitt aufweist, an dem der Zapfen (23) angeordnet ist und mit dem sie zwischen zwei beabstandet zueinander angeordneten Dichtungsringen, insbesondere O-Ringen (62, 63), schwimmend gelagert ist, wobei die Spindel (2) bevorzugt mit dem kugelförmigen Abschnitt auf einer Scheibenführung (3) aufliegt, in der der Stellblock (4) geführt ist.

12. Sanitärarmatur (9) mit einem Ventilsitz (91), in dem wenigstens ein Zulaufkanal (92) und wenigstens zwei Ablaufkanäle (93) münden und in den ein Ventiloberteil nach einem der vorgenannten Ansprüche derart eingebracht ist, dass die Durchlassöffnungen (52, 52') der Durchlassscheibe (5, 5') mit den Ablaufkanälen (93) verbunden sind, wobei der Zulaufkanal (92) bevorzugt derart angeordnet ist, dass er im Wesentlichen in einer Ebene mit dem wenigstens einen Durchtrittsfenster (111) des Kopfstücks (1) des Ventiloberteils liegt.

13. Sanitärarmatur nach Anspruch 12, **dadurch gekennzeichnet, dass** das Ventiloberteil nach einem der Ansprüche 8 bis 11 ausgebildet ist, wobei eine Gleitplatte (96) angeordnet ist, durch welche die Spindel (2) geführt ist und auf welcher der Schieber (8) des Ventiloberteils verschiebbar aufliegt.

14. Sanitärarmatur nach Anspruch 12 oder 13, **dadurch gekennzeichnet, dass** diese ein Innengewinde zur Aufnahme einer Schraubhülse (19) zur Fixierung des Ventiloberteils aufweist.

## Claims

1. Valve top section for insertion in a sanitary fitting, with a head piece (1), in which a spindle (2) is pivotably mounted, which protrudes with its first end from the head piece (1) and is engaged with its second end via a pin (23) with a control element, which is in contact with a stationary passage disc (5), wherein the passage disc (5) has at least two passage openings (52, 52'), wherein the control element is designed as an adjusting block (4), which is dimensioned in such a manner that at least one passage opening (52, 52') can be closed by it, **characterised in that** the passage openings (52, 52') are each formed by the at least partial overlapping of a collecting channel (53), which is inserted in the passage disc (5, 5') on its upper side facing the adjusting block (4), with an outlet channel (54) inserted in it on its opposite underside, wherein at least one outlet channel (54) is circular, wherein at least one collecting channel (53) extends on two opposite sides beyond the assigned outlet channel (54), wherein at least one collecting channel (53) is of an arcuate design.

2. Valve top section according to claim 1, **characterised in that** the head piece (1) has at least one laterally arranged passage window (111), wherein the passage disc (5, 5') is arranged below the passage window (111) on its side opposite the spindle (2).

3. Valve top section according to claim 2, **characterised in that** all outlet channels (54) are circular, wherein preferably at least one collecting channel (53) is narrower than the assigned outlet channel (54).

4. Valve top section according to claim 3, **characterised in that** two passage openings (52, 52') are arranged, which are formed by the overlapping of two curved collecting channels (53) of mutually opposite sense each having a circular outlet channel (54).

5. Valve top section according to one of the previous claims, **characterised in that** in the head piece (1) at least one seal (6), preferably at least one lip seal, is arranged surrounding the passage openings (52, 52') of the passage disc (5, 5').

6. Valve top section according to one of the previous claims, **characterised in that** the spindle (2) engages at its end protruding from the head piece (1) in a pivot area (83) of a slider (8), in which a driver is arranged, via which the spindle (2) is connected to the slider (8).

7. Valve top section according to claim 6, **characterised in that** the driver is formed by a driver axle (25), which is guided through a long hole (24) extending in an axial direction of the spindle (2), wherein the spindle (2) is connected preferably via a spring element, in particular via a coil spring (7), to the driver and wherein the spindle (2) is particularly preferably pivotably connected to the head piece (1) via an axle pin (26), wherein the axle pin (26) is connected to the spring element.

8. Valve top section according to claim 7, **characterised in that** the spring element is received by a blind hole (27) axially inserted in the spindle (2), which is penetrated in a transverse direction by the axle pin (26), which is connected to the spring element.

9. Valve top section according to one of claims 6 to 8, **characterised in that** a display element is arranged at the slider (8), via which the position of the adjusting block (4) can be displayed, wherein the display element is preferably arranged so as to be displaceable in the slider (8) and at least partially visible from the outside and is at least temporarily connected to the spindle (2) in such a manner that it can be displaced by pivoting the spindle (2) relative to the slider (8) and wherein particularly preferably markings are arranged at the slider (8), which are respectively assigned to a position of the adjusting block (4).

10. Valve top section according to claim 9, **characterised in that** the display element has at least two regions of different colour and is displaceable relative to a window provided in the slider (8) in such a manner that different colours are visible through the window depending on the position of the display element.

11. Valve top section according to one of the previous claims, **characterised in that** the spindle (2) has a spherical section, on which the pin (23) is arranged and with which it is floatingly mounted between two sealing rings, in particular O-rings (62, 63) arranged at a distance from one another, wherein the spindle (2) preferably rests with the spherical section on a disc guide (3), in which the adjusting block (4) is guided.

12. Sanitary fitting (9) with a valve seat (91), into which lead at least one inlet channel (92) and at least two drain channels (93) and in which a valve top section according to one of the previous claims is inserted in such a manner that the passage openings (52, 52') of the passage disc (5, 5') are connected to the drain channels (93), wherein the inlet channel (92) is preferably arranged in such a manner that it is substantially located in one plane with the at least one passage window (111) of the head piece (1) of the valve top section.

13. Sanitary fitting according to claim 12, **characterised in that** the valve top section is designed according to one of claims 8 to 11, wherein a slide plate (96) is arranged, through which the spindle (2) is guided and on which the slider (8) of the valve top section displaceably rests.

14. Sanitary fitting according to claim 12 or 13, **characterised in that** it has an internal thread for receiving a screw sleeve (19) for fixing the valve top section.

## Revendications

1. Partie supérieure de soupape à introduire dans une robinetterie sanitaire, comprenant une pièce têtière (1) dans laquelle une broche (2) est en appui pivotant, broche qui par sa première extrémité fait saillie hors de la pièce têtière (1) et qui par sa seconde extrémité engrène via un picot (23) avec un élément de commande, lequel élément de commande est en contact avec un disque de passage (5) fixe, sachant que le disque de passage (5) présente au moins deux orifices de passage (52, 52'), sachant que l'élément de commande est configuré comme bloc d'ajustement (4) dimensionné de telle manière que via ce dernier au moins un orifice de passage (52, 52') est obturable, **caractérisée en ce que** les orifices de passage (52, 52') sont respectivement formés par la superposition au moins partielle d'un canal collecteur (53) ménagé dans le disque de passage (5, 5'), sur son côté supérieur regardant le bloc d'ajustement (4), avec un canal de sortie (54) ménagé sur son côté inférieur situé en face du côté supérieur, sachant qu'au moins un canal de sortie (54) est configuré de forme circulaire, sachant qu'au moins un canal collecteur (53) s'étend, sur deux côtés se faisant face, au-delà du canal de sortie (54) afférent, sachant qu'au moins un canal collecteur (53) est configuré en forme d'arc.

2. Partie supérieure de soupape selon la revendication 1, **caractérisée en ce que** la pièce têtière (1) présente au moins une fenêtre de passage (111) disposée latéralement, sachant que le disque de passage (5, 5') est disposé en dessous de la fenêtre de passage (111), sur son côté situé en face de la broche (2).

3. Partie supérieure de soupape selon la revendication 2, **caractérisée en ce que** tous les canaux de sortie (54) sont configurés de forme circulaire, sachant que de préférence au moins un canal collecteur (53) est configuré plus étroit que le canal de sortie (54) afférent.

4. Partie supérieure de soupape selon la revendication 3, **caractérisée en ce que** sont disposés deux orifices de sortie (52, 52') formés par la superposition de deux canaux collecteurs (53) configurés en coude de sens réciproquement opposés, avec respectivement un canal de sortie (54) configuré de forme circulaire.

5. Partie supérieure de soupape selon l'une des revendications précédentes, **caractérisée en ce que** dans la pièce têtière (1) est disposé au moins un joint (6), de préférence au moins un joint à lèvres, entourant les orifices de passage (52, 52') du disque de passage (5, 5').

6. Partie supérieure de soupape selon l'une des revendications précédentes, **caractérisée en ce que** la broche (2), en son extrémité dépassant de la pièce têtière (1), engrène dans un volume de pivotement (83) d'un tiroir (8) dans lequel est disposé un taquet entraîneur via lequel la broche (2) est reliée avec le tiroir (8).

7. Partie supérieure de soupape selon la revendication 6, **caractérisée en ce que** le taquet entraîneur est formé par un axe entraîneur (25) guidé par un trou oblong (24) s'étendant dans le sens axial de la broche (2), sachant que la broche (2) est reliée avec le taquet entraîneur de préférence via un élément ressort, en particulier via un ressort hélicoïdal (7) et sachant que la broche (2) est, de manière particulièrement préférentielle, reliée de manière pivotante via une goupille axiale (26) avec la pièce têtière (1), sachant que la goupille axiale (26) est reliée avec l'élément ressort.

8. Partie supérieure de soupape selon la revendication 7, **caractérisée en ce que** l'élément ressort est reçu par un trou borgne (27) ménagé axialement dans la broche (2), trou qui est traversé dans le sens transversal par la goupille axiale (26) qui est reliée avec l'élément ressort.

9. Partie supérieure de soupape selon l'une des revendications 6 à 8, **caractérisée en ce que** contre le tiroir (8) est disposé un élément d'affichage via lequel la position du bloc d'ajustement (4) est affichable, sachant que l'élément d'affichage peut être déplacé de manière préférentielle à l'intérieur du tiroir (8) et qu'au moins une zone est disposée visible de l'extérieur et qu'elle est reliée au moins temporairement avec la broche (2) de sorte à être déplaçable relativement au tiroir (8) par pivotement de la broche (2) et sachant que de manière particulièrement préférentielle sont disposés contre le tiroir (8) des marquages respectivement attribués à une position du bloc d'ajustement (4).

10. Partie supérieure de soupape selon la revendication 9, **caractérisée en ce que** l'élément d'affichage présente au moins deux zones de couleurs différentes et qu'il est déplaçable relativement à une fenêtre présente dans le tiroir (8), de sorte que sont visibles à travers la fenêtre des couleurs différentes en fonction de la position de l'élément d'affichage.

11. Partie supérieure de soupape selon l'une des revendications précédentes, **caractérisée en ce que** la broche (2) présente un segment sphérique contre lequel est disposé le picot (23) et avec lequel elle se trouve en appui flottant entre deux bagues d'étanchéité réciproquement distantes, notamment deux joints toriques (62, 63), sachant que la broche (2) applique de préférence par son segment sphérique sur un guidage (3) de disque dans lequel le bloc d'ajustement (4) est guidé.

12. Robinetterie sanitaire (9) présentant un siège (91) de soupape dans lequel aboutissent au moins un canal d'afflux (92) et au moins deux canaux d'écoulement (93) et dans lequel est introduite une partie supérieure de soupape selon l'une des revendications précédentes, de sorte que les orifices de passage (52, 52') du disque de passage (5, 5') sont reliés avec les canaux d'écoulement (93), sachant que le canal d'afflux (92) est disposé de préférence de sorte à se trouver essentiellement sur un plan avec au moins la fenêtre de passage (111) de la pièce têtière (1) de la partie supérieure de soupape.

13. Robinetterie sanitaire selon la revendication 12, **caractérisée en ce que** la partie supérieure de soupape est configurée selon l'une des revendications 8 à 11, sachant qu'est disposée une plaque coulissante (96) à travers laquelle est guidée la broche (2) et sur laquelle le tiroir (8) de la partie supérieure de soupape applique de manière coulissante.

14. Robinetterie sanitaire selon la revendication 12 ou 13, **caractérisée en ce que** cette dernière présente un filetage intérieur recevant une douille de vissage (19) pour immobiliser la partie supérieure de soupape.
